Europäisches Patentamt

European Patent Office

Office européen des brevets

(19)

(11) Veröffentlichungsnummer: **0 030 325**
**B1**

(12) **EUROPÄISCHE PATENTSCHRIFT**

(45) Veröffentlichungstag der Patentschrift:
**19.02.86**

(51) Int. Cl.⁴: **G 02 B 21/22**

(21) Anmeldenummer: **80107383.4**

(22) Anmeldetag: **26.11.80**

(54) Stereomikroskop zur gleichzeitigen Benutzung durch mehrere Beobachter.

(30) Priorität: **08.12.79 DE 2949428**

(43) Veröffentlichungstag der Anmeldung:
**17.06.81 Patentblatt 81/24**

(45) Bekanntmachung des Hinweises auf die Patenterteilung:
**19.02.86 Patentblatt 86/8**

(84) Benannte Vertragsstaaten:
**CH FR GB IT LI**

(56) Entgegenhaltungen:
**US - A - 3 671 099**
**US - A - 4 138 191**
**US - A - 4 167 302**
**US - A - 4 277 130**

(73) Patentinhaber: **Firma Carl Zeiss, Postfach 1369/1380, D-7082 Oberkochen (DE)**

(72) Erfinder: **Lang, Walter, Dr. rer.nat., Finkenweg 33, D-7923 Königsbronn (DE)**
Erfinder: **Müller, Ortwin, Kolpingstrasse 34, D-7080 Aalen 1 (DE)**
Erfinder: **Neidlinger, Alfons, Albrecht-Dürer-Strasse 53, D-7920 Heidenheim (Brenz) (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Stereomikroskop zur gleichzeitigen Benutzung durch mehrere Beobachter.

Eines der bedeutendsten Anwendungsgebiete des Stereomikroskops ist das Operationsmikroskop in der Mikrochirurgie. Für den Einsatz des Operationsmikroskops in der jeweiligen Fachdisziplin ist neben der Art der Beleuchtung die Möglichkeit der Mitbeobachtung, also die gleichzeitige Benützung des Operationsmikroskops durch zwei Beobachter oder Benützung durch einen Beobachter und Mitbeobachtung über eine Fernseheinrichtung ausschlaggebend. Mit zunehmender Kompliziertheit der Operationen ist der Operateur in steigendem Masse darauf angewiesen, Handgriffe und Mitarbeiten auf einen Assistenten zu übertragen. Von der Gerätetechnik her wird für den Assistenten gefordert, dass er die gleichen oder fast gleichen Beobachtungs- und Arbeitsmöglichkeiten besitzt wie der Hauptoperator.

Es ist bekannt, zur Erfüllung dieser Erfordernisse bei einem Operationsmikroskop zwei komplette Stereo-Strahlengänge unter 90° so anzuordnen, dass sie ein gemeinsames Gehäuse und ein gemeinsames Lupenobjektiv besitzen (US-A-4 138 191). Nachteilig bei dieser Lösung ist der hohe gerätetechnische Aufwand, der eine Kompaktbauweise mit eingeschlossener Beleuchtung verhindert und die Anordnung pankratischer Systeme für alle vier Strahlengänge erschwert.

Auch ist ein Stereomikroskop für zwei Beobachter mit physikalischer Strahlteilung hinter dem Objektiv bekannt (US-A-4 167 302).

Der Erfindung liegt deshalb die Aufgabe zugrunde, ein Mikroskop für mehrfache Beobachtung zu schaffen, welches einen geringeren gerätetechnischen Aufwand erfordert und eine Kompaktbauweise mit eingeschlossener Beleuchtung erlaubt. Ausserdem sollen beide Beobachter das Operationsfeld unter dem gleichen stereoskopischen Blickwinkel beobachten können.

Diese Aufgabe wird erfindungsgemäss dadurch gelöst, dass drei Beobachtungsstrahlengänge vorgesehen sind, die zum Objekt konvergieren, dass die Mitten der Eintrittspupillen der Beobachtungsstrahlengänge auf den Eckpunkten eines Dreiecks liegen, und dass für mindestens einen der Beobachtungsstrahlengänge Mittel zur physikalischen Strahlenteilung vorgesehen sind, die eine gleichzeitige Benutzung dieses Strahlenganges durch zwei Beobachter gestattet. Die Mittel zur Herbeiführung der Richtungskonvergenz zum Objekt für die drei Beobachtungsstrahlengänge können in an sich bekannter Weise darin bestehen, dass nach Art eines Greenough-Mikroskopes drei Objektive verwendet werden, die im Konvergenzwinkel zueinander geneigt sind, oder dass für die drei Beobachtungsstrahlengänge ein gemeinsames Objektiv vorgesehen ist, bei dem die Konvergenz der Beobachtungsstrahlengänge durch prismatische Wirkung an diesem gemeinsamen Objektiv entsteht.

Zum Ausgleich für die Lichtschwächung, die durch die physikalische Strahlenteilung in dem beiden Beobachtern gemeinsamen Beobachtungsstrahlengang entsteht, ist es zweckmässig, der Eintrittspupille dieses Strahlenganges etwa den $\sqrt{2}$-fachen Durchmesser der Eintrittspupillen in den beiden anderen Beobachtungsstrahlengängen zu geben. Durch einen derartigen Ausgleich ist gewährleistet, dass jeder Beobachter auf seinem rechten und linken Auge gleich hell sieht.

Bei einem vorteilhaften Ausführungsbeispiel der Erfindung sind die Mitten der Eintrittspupillen der Beobachtungsstrahlengänge auf den Eckpunkten eines gleichschenkligen, rechtwinkligen Dreiecks angeordnet, wobei die den beiden Beobachtern gemeinsame Eintrittspupille im rechten Winkel des Dreiecks liegt. Bei einer derartigen Anordnung ist die Stereobasis des einen Beobachters gleich gross wie die des anderen und steht im rechten Winkel zu ihr.

Bei einer Verteilung der Mitten der Eintrittspupillen auf den Eckpunkten eines gleichseitigen Dreiecks kann erstmalig ein echtes Stereomikroskop für drei Beobachter (Triploskop) geschaffen werden, bei dem alle drei Beobachtungsstrahlengänge gleichwertig sind und die gleiche Stereobasis aufweisen. Insbesondere lässt eine derartige Anordnung der Beobachtungsstrahlengänge die Aufgaben in der Handchirurgie als Triploskop meistern. Eine derartige Anordnung kann aber auch als Zweier-System unter anderem für die Vitrektomie eingesetzt werden. Bei der Verwendung als Triploskop muss für alle drei Eintrittspupillen eine physikalische Strahlenteilung vorgesehen werden.

Ein weiteres sinnvolles Anwendungsbeispiel sieht die Anordnung der Eintrittspupillen der Beobachtungsstrahlengänge auf den Eckpunkten eines spitzwinklig gleichschenkligen Dreiecks vor, bei der zwei Systeme gleiche Stereobasis besitzen, während das dritte System mit einer reduzierten Stereobasis vorzugsweise für operative Eingriffe in grossen und tiefen Kanälen (z.B. Bandscheibenoperationen) eingesetzt werden kann. Bei der Verwendung als Stereomikroskop für zwei Beobachter bietet die Anordnung der drei Beobachtungsstrahlengänge in den Eckpunkten eines spitzwinkligen gleichseitigen Dreiecks die Möglichkeit, dass sich zwei Operateure gegenüber sitzen können, was bei Operationen an peripheren Nerven häufig gefordert wird.

Ausführungsbeispiele der Erfindung sind in der Zeichnung dargestellt und werden im folgenden näher beschrieben. Es zeigen

Fig. 1 eine perspektivische Darstellung des erfindungsgemässen Stereomikroskops;

Fig. 2 einen Schnitt durch das Objektiv des in Fig. 1 dargestellten Stereomikroskops;

Fig. 3 ein pankratisches System für den in Fig. 1 und 2 gezeigten Beobachtungsstrahlengang;

Fig. 4 die graphische Darstellung der Luftabstände des pankratischen Systems nach Fig. 3 als Funktion der Brennweite der Tubuslinse und des pankratischen Systems;

Fig. 5 die schematische Darstellung einer Anordnung der drei Beobachtungsstrahlengänge in den Eckpunkten eines gleichschenkligen Dreiecks;

Fig. 6 eine schematische Darstellung einer Anordnung der drei Beobachtungsstrahlengänge in den Eckpunkten eines gleichseitigen Dreiecks.

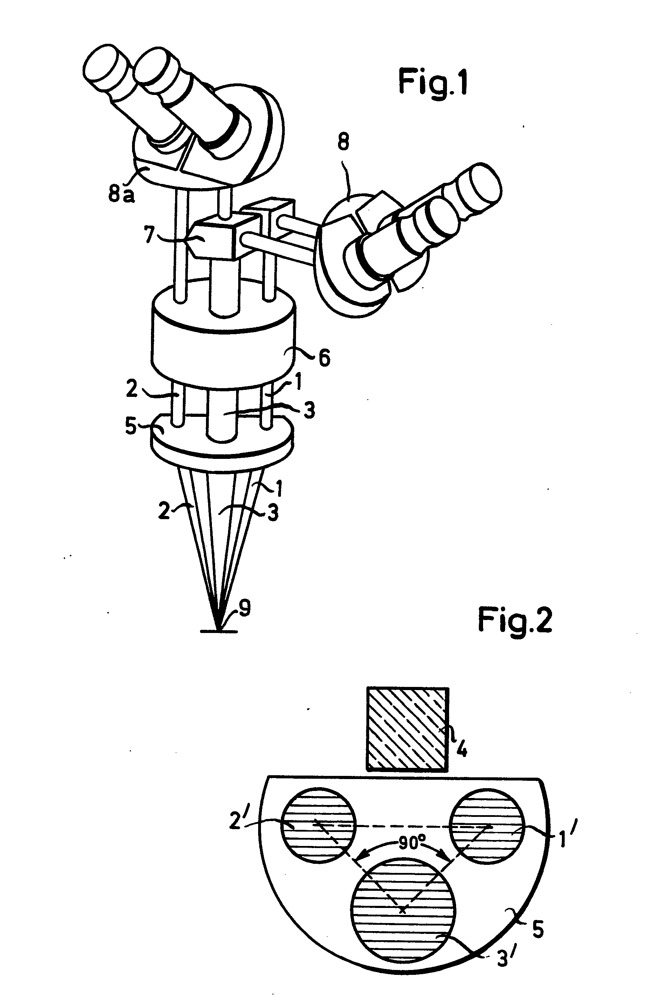

In der Darstellung der Fig. 1 ist mit 9 der zu beobachtende Objektpunkt bezeichnet, mit 1, 2 und 3 die Beobachtungsstrahlengänge, mit 5 das den drei Strahlengängen gemeinsame Lupenobjektiv. Mit 6 ist ein optisches System angedeutet, welches entweder dazu dient, die Vergrösserung zu variieren und/oder für alle drei Strahlengänge gleichzeitig eine schwache Divergenz oder Konvergenz im parallelen Strahlengang zu machen (Fokussieroptik). Im Strahlengang 3 wird durch ein Prismensystem 7 eine physikalische Strahlenteilung erreicht. Zwischen dem optischen System 6 und dem Prismensystem 7 herrscht paralleler Strahlengang. Mit 8 und 8a sind die Okulartuben bezeichnet. Das Prismensystem 7 lässt durch zweifache Reflexion die Bildlage bei Beobachtung durch den Tubus 8 invariant.  •

Bei der in Höhe des Lupenobjektives 5 gezeigten Schnittdarstellung ist die Anordnung der drei Beobachtungsstrahlengänge 1, 2 und 3 zu sehen. Die Ausbildung des Lupenobjektives 5 als Kreissegment erlaubt die Anordnung der Beleuchtungsoptik 4 unabhängig von der Beobachtung. Dadurch werden störende Beeinflussungen der Beobachtung durch Streu- und Reflexlicht am Objektiv verhindert. Bei diesem gezeigten Ausführungsbeispiel werden die Pupillen 1' und 3' für den einen Beobachter und die Pupillen 2' und 3' für den zweiten Beobachter verwendet. Bei dieser Anordnung der Beobachtungsstrahlengänge ist die Stereobasis des einen Beobachters gleich gross wie die des anderen und steht im rechten Winkel zu ihr. Die Beobachtungspupille 3' ist für beide Beobachter gemeinsam und, da eine physikalische Strahlenteilung im Strahlengang 3 stattfindet, auch identisch. Sie besitzt etwa den $\sqrt{2}$-fachen Durchmesser der beiden Pupillen 1' und 2'.

Aus der Fig. 2 ist ersichtlich, dass die Beleuchtungspupille 4 den Beobachtungspupillen sehr naheliegt. Deshalb kann hier von einer paraxialen Beleuchtung gesprochen werden. Da die Beleuchtung ein Minimum an Raum beansprucht, insbesondere wenn eine seitliche Einspeisung durch Faseroptik erfolgt, ist im oberen Teil des Mikroskops gegenüber dem Strahlengang 3 reichlich Platz vorhanden, der es erlaubt, mechanische Führungen und Antriebsglieder für die Optik des Systems 6 anzuordnen. Hierdurch ist eine kompakte Bauweise des gesamten Mikroskopes möglich. Das erfindungsgemässe Mikroskop lässt sich auch als Mikroskopbaukastensystem einsetzen. Wird z.B. die Beobachtung für einen Beobachter und die Mitbeobachtung über Fernseheinrichtung gewünscht, so werden die Beobachtungsstrahlengänge 1 und 2 durch den Beobachter benutzt und der Strahlengang 3 für die Fernsehkamera. Da solche Mitbeobachtereinrichtungen stets einen grösseren Helligkeitsbedarf haben als der direkte Beobachter, so wirkt es sich auch bei dieser Anwendung vorteilhaft aus, dass die Pupille 3' flächengrösser ist als die beiden anderen Pupillen 1' und 2'.

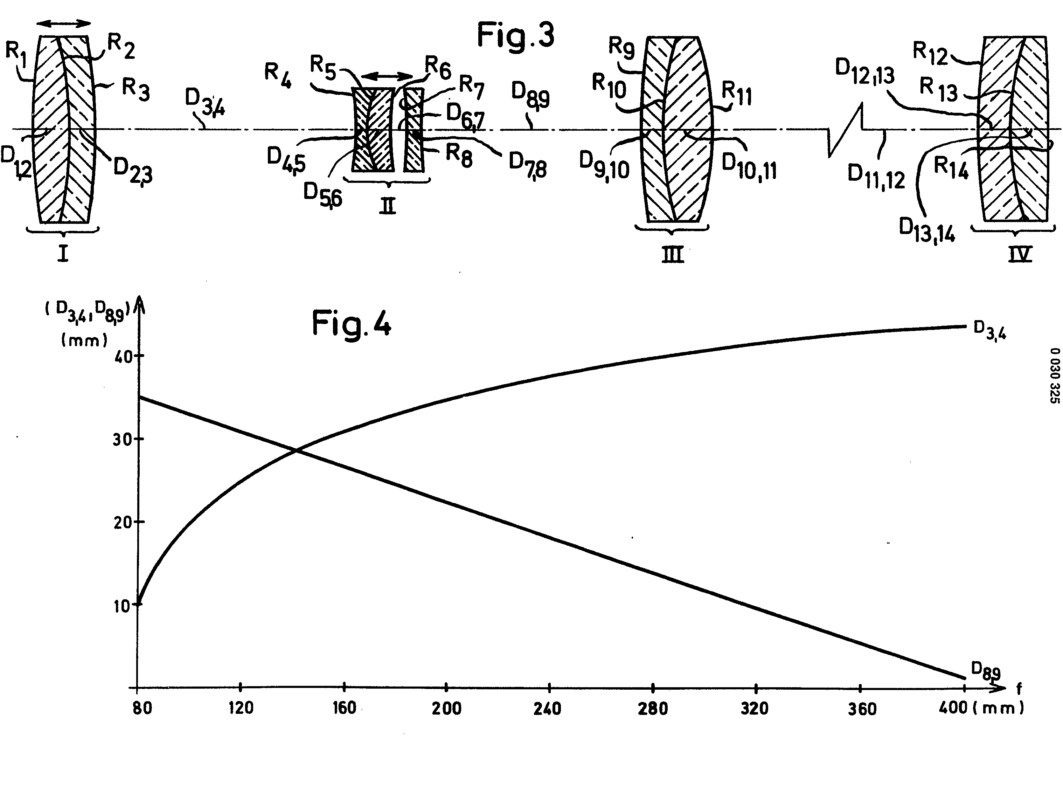

Bei einer Anordnung der Strahlengänge gemäss Fig. 1 und 2 ist für den Strahlengang 3 ein pankratisches System ungewöhnlich grosser Öffnung erforderlich, wie es in Fig. 3 für Vergrösserungsmassstäbe 0,5–2,5 dargestellt ist. Dieses neue optische System besteht aus verschiebbaren Linsengruppen I und II, einer festen Linsengruppe III und aus einer in grösserem Abstand davon angeordneten, ebenfalls festen Tubusline IV. Die Radien R, Brechwerte $n_d$ und Abbesche Zahlen $V_d$ für die Linsen und die Dicken D für Linsen und Luftabstände sind in der folgenden Tabelle aufgeführt.

In der Abbildung der Fig. 4 ist dargestellt, wie die Dicken D der Luftabstände zwischen den Linsengruppen I und II sowie II und III von der Brennweite f der Tubuslinse IV und des pankratischen Systems abhängt. Im dargestellten Ausführungs-

| Gruppen | Radien | | Dicken | | $n_d$ | $v_d$ |
|---|---|---|---|---|---|---|
| | $R_1 =$ | 66,00 | | | | |
| | | | $D_{1,2} =$ | 4,8 | 1.60738 | 56,65 |
| I | $R_2 = -$ | 38,10 | | | | |
| | | | $D_{2,3} =$ | 2,8 | 1.76180 | 26,95 |
| | $R_3 = -$ | 94,00 | | | | |
| | | | $D_{3,4} =$ | 31,4 | | |
| | $R_4 = -$ | 31,00 | | | | |
| | | | $D_{4,5} =$ | 1,5 | 1.60729 | 59,46 |
| | $R_5 =$ | 11,30 | | | | |
| II | | | $D_{5,6} =$ | 2,8 | 1.78472 | 25,76 |
| | $R_6 =$ | 23,20 | | | | |
| | | | $D_{6,7} =$ | 2,0 | | |
| | $R_7 = -$ | 90,00 | | | | |
| | | | $D_{7,8} =$ | 1,5 | 1.58913 | 61,27 |
| | $R_8 =$ | 90,00 | | | | |
| | | | $D_{8,9} =$ | 26,7 | | |
| | $R_9 =$ | 130,00 | | | | |
| | | | $D_{9,10} =$ | 2,8 | 1.76180 | 26,95 |

| Gruppen | Radien | Dicken | $n_d$ | $v_d$ |
|---|---|---|---|---|
| III | $R_{10} = 41{,}00$ | | | |
| | | $D_{10,11} = 5{,}2$ | 1.60738 | 56,65 |
| | $R_{11} = -48{,}50$ | | | |
| | | $D_{11,12} = 80{,}0$ | | |
| | $R_{12} = 76{,}30$ | | | |
| | | $D_{12,13} = 3{,}8$ | 1.67270 | 32,21 |
| IV | $R_{13} = 43{,}00$ | | | |
| | | $D_{13,14} = 4{,}5$ | 1.51680 | 64,17 |
| | $R_{14} = -500{,}00$ | | | |

beispiel hat die Tubuslinse eine Brennweite von f = 160 mm.

Auch bei einem Einsatz des Mikroskopes für zwei Beobachter lassen sich durch weitere Strahlenteilungen in den Beobachtungsstrahlengängen Film- und Fernsehaufzeichnungen anschliessen. Benutzt man z.B. hierfür bei physikalischer Strahlenteilung die Pupillen 1' und 2', Abb. 1, so wird zweckmässigerweise darauf verzichtet, die Pupille 3' im Durchmesser gegenüber 1' und 2' zu vergrössern. So entsteht ein Mikroskop für zwei Beobachter mit je einer Film- und Fernseheinrichtung, welches beiden Beobachtern gleich helle Bilder bei gleicher Stereobasis liefert.

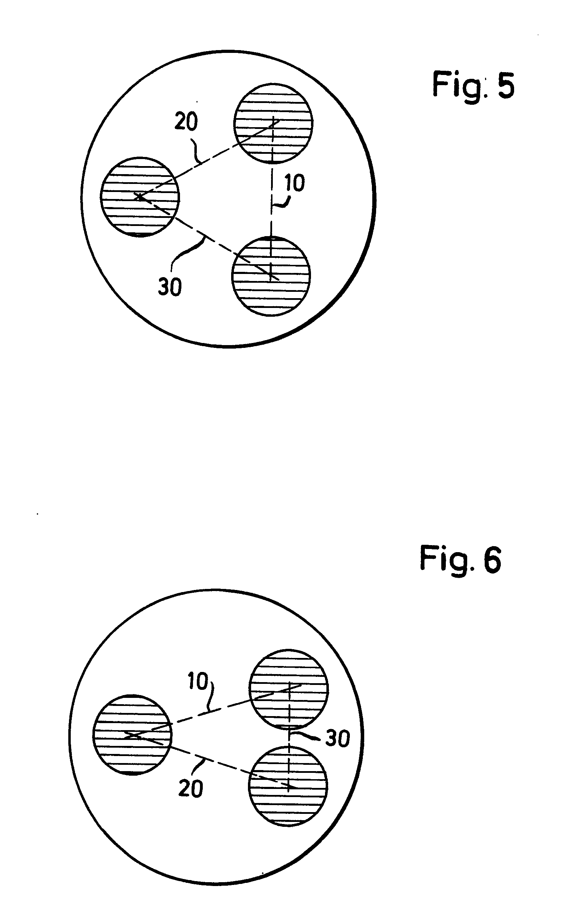

Bei einer Anordnung der Pupillenmitten der Beobachtungsstrahlengänge gemäss Fig. 5 kann bei physikalischer Strahlenteilung jeder Eintrittspupille ein echtes Triploskop geschaffen werden, weil die drei Systeme 10, 20 und 30 völlig gleichwertig sind und auch die gleiche Stereobasis aufweisen. Eine derartige Anordnung kann aber auch als Zweier-Beobachtungssystem für die Vitrektomie eingesetzt werden. Insbesondere jedoch lassen sich bei einer Anordnung gemäss Fig. 5 die Aufgaben in der Handchirurgie als Triploskop meistern.

In einer Anordnung gemäss Fig. 6 haben die Systeme 10 und 20 eine grosse Stereobasis, während das System 30 mit einer reduzierten Stereobasis vorzugsweise für operative Eingriffe in grossen und tiefen Kanälen eingesetzt werden kann (z.B. Bandscheibenoperationen). Darüber hinaus bietet die Anordnung gemäss Fig. 6 auch die Möglichkeit, dass sich die Operateure annähernd um 180° gegenüber sitzen können, was bei Operationen an peripheren Nerven häufig gefordert wird.

**Patentansprüche**

1. Stereomikroskop zur gleichzeitigen Benutzung durch mehrere Beobachter, dadurch gekennzeichnet, dass drei Beobachtungsstrahlengänge (1, 2, 3) vorgesehen sind, die zum Objekt (9) konvergieren, dass die Mitten der Eintrittspupillen (1', 2', 3') der Beobachtungsstrahlengänge auf den Eckpunkten eines Dreiecks liegen, und dass für mindestens einen der Beobachtungsstrahlengänge (3) Mittel (7) zur physikalischen Strahlenteilung vorgesehen sind, die eine gleichzeitige Benutzung dieses Strahlengangs durch zwei Beobachter gestattet.

2. Stereomikroskop nach Anspruch 1, dadurch gekennzeichnet, dass die beiden Beobachtern gemeinsame Eintrittspupille (3') einen um den Faktor von etwa $\sqrt{2}$ grösseren Durchmesser als die beiden anderen Eintrittspupillen (1', 2') besitzt.

3. Stereomikroskop nach Anspruch 2, dadurch gekennzeichnet, dass der für die beiden Beobachter gemeinsame Beobachtungsstrahlengang (3) ein pankratisches System grosser Öffnung enthält.

4. Stereomikroskop nach Anspruch 3, gekennzeichnet durch folgende Datentabelle für ein pankratisches System grosser Öffnung:

| Gruppen | Radien | Dicken | $n_d$ | $v_d$ |
|---|---|---|---|---|
| | $R_1 = 66{,}00$ | | | |
| | | $D_{1,2} = 4{,}8$ | 1.60738 | 56,65 |
| I | $R_2 = -38{,}10$ | | | |
| | | $D_{2,3} = 2{,}8$ | 1.76180 | 26,95 |
| | $R_3 = -94{,}00$ | | | |
| | | $D_{3,4} = 31{,}4$ | | |
| | $R_4 = -31{,}00$ | | | |
| | | $D_{4,5} = 1{,}5$ | 1.60729 | 59,46 |
| | $R_5 = 11{,}30$ | | | |
| II | | $D_{5,6} = 2{,}8$ | 1.78472 | 25,76 |
| | $R_6 = 23{,}20$ | | | |
| | | $D_{6,7} = 2{,}0$ | | |
| | $R_7 = -90{,}00$ | | | |
| | | $D_{7,8} = 1{,}5$ | 1.58913 | 61,27 |

| Gruppen | Radien | | Dicken | $n_d$ | $v_d$ |
|---|---|---|---|---|---|
| | $R_8 =$ | 90,00 | | | |
| | | | $D_{8,9} = 26,7$ | | |
| | $R_9 =$ | 130,00 | | | |
| | | | $D_{9,10} = 2,8$ | 1.76180 | 26,95 |
| III | $R_{10} =$ | 41,00 | | | |
| | | | $D_{10,11} = 5,2$ | 1.60738 | 56,65 |
| | $R_{11} = -$ | 48,50 | | | |
| | | | $D_{11,12} = 80,0$ | | |
| | $R_{12} =$ | 76,30 | | | |
| | | | $D_{12,13} = 3,8$ | 1.67270 | 32,21 |
| IV | $R_{13} =$ | 43,00 | | | |
| | | | $D_{13,14} = 4,5$ | 1.51680 | 64,17 |
| | $R_{14} = -$ | 500,00 | | | |

5. Stereomikroskop nach Anspruch 2, dadurch gekennzeichnet, dass die Mitten der Eintrittspupillen auf den Eckpunkten eines gleichschenkligen, rechtwinkligen Dreiecks liegen, wobei die den beiden Beobachtern gemeinsame Eintrittspupille im rechten Winkel des Dreiecks liegt.

6. Stereomikroskop nach Anspruch 2, dadurch gekennzeichnet, dass die Mitten der Eintrittspupillen auf den Eckpunkten eines gleichschenkligen Dreiecks liegen.

7. Stereomikroskop nach Anspruch 1, dadurch gekennzeichnet, dass die Mitten der Eintrittspupillen auf den Eckpunkten eines gleichseitigen Dreiecks liegen und dass für alle drei Eintrittspupillen eine physikalische Strahlenteilung vorgesehen ist.

8. Stereomikroskop nach Anspruch 2 oder einem der Ansprüche 3–5, dadurch gekennzeichnet, dass eine paraxiale Beleuchtung (4) vorgesehen ist, deren Austrittspupille den drei Eintrittspupillen für die Beobachtungsstrahlengänge eng benachbart ist.

**Claims**

1. Stereoscopic microscope for simultaneous multiple observation, comprising three observing light paths (1, 2, 3), converging on an object (9), to be observed, the light paths having entrance pupils (1′, 2′, 3′) with centers lying at the corners of a triangle, and means (7), for splitting at least one of said light paths (3) in such manner as to provide from said three light paths two pairs of stereoscopically related observing light paths so that two observers may simultaneously observe the object stereoscopically.

2. Stereoscopic microscope according to claim 1, characterized in that the entrance pupil (3′) of the light path which is common to both observers has a diameter which is larger than the diameter of the entrance pupils (1′, 2′) of the other two light paths by a factor of approximately the square root of two.

3. Stereoscopic microscope according to claim 2, characterized in that a zoom lens system having a relatively large aperture is provided for the light path (3) which is common to both observers.

4. Stereoscopic microscope according to claim 3, characterized in that said zoom lens system has substantially the characteristics set forth in the following table:

| Groups | Radii | | Thickness | $n_d$ | $v_d$ |
|---|---|---|---|---|---|
| | $R_1 =$ | 66,00 | | | |
| | | | $D_{1,2} = 4,8$ | 1.60738 | 56,65 |
| I | $R_2 = -$ | 38,10 | | | |
| | | | $D_{2,3} = 2,8$ | 1.76180 | 26,95 |
| | $R_3 = -$ | 94,00 | | | |
| | | | $D_{3,4} = 31,4$ | | |
| | $R_4 = -$ | 31,00 | | | |
| | | | $D_{4,5} = 1,5$ | 1.60729 | 59,46 |
| | $R_5 =$ | 11,30 | | | |
| | | | $D_{5,6} = 2,8$ | 1.78472 | 25,76 |
| II | $R_6 =$ | 23,20 | | | |
| | | | $D_{6,7} = 2,0$ | | |
| | $R_7 = -$ | 90,00 | | | |
| | | | $D_{7,8} = 1,5$ | 1.58913 | 61,27 |

| Groups | Radii | Thickness | $n_d$ | $v_d$ |
|--------|-------|-----------|-------|-------|
|  | $R_8 = 90,00$ |  |  |  |
|  |  | $D_{8,9} = 26,7$ |  |  |
|  | $R_9 = 130,00$ |  |  |  |
|  |  | $D_{9,10} = 2,8$ | 1.76180 | 26,95 |
| III | $R_{10} = 41,00$ |  |  |  |
|  |  | $D_{10,11} = 5,2$ | 1.60738 | 56,65 |
|  | $R_{11} = -48,50$ |  |  |  |
|  |  | $D_{11,12} = 80,0$ |  |  |
|  | $R_{12} = 76,30$ |  |  |  |
|  |  | $D_{12,13} = 3,8$ | 1.67270 | 32,21 |
| IV | $R_{13} = 43,00$ |  |  |  |
|  |  | $D_{13,14} = 4,5$ | 1.51680 | 64,17 |
|  | $R_{14} = -500,00$ |  |  |  |

5. Stereoscopic microscope according to claim 2, characterized in that the centers of the entrance pupils are located at the corners of an isosceles rectangular triangle, wherein the entrance pupil which is common to both observers lies at the right angle of said triangle.

6. Stereoscopic microscope according to claim 2, characterized in that the centers of the entrance pupils are located at the corners of an isosceles triangle.

7. Stereoscopic microscope according to claim 1, characterized in that the centers of the entrance pupils are located at the corners of an equilateral triangle, and that a physical light splitting is provided for all three entrance pupils.

8. Stereoscopic microscope according to claim 2 or one of claims 3 to 5, characterized in that a paraxial illumination (4) is provided, the exit pupil of which being located close to the entrance pupils of the observation light paths.

**Revendications**

1. Stéréomicroscope conçu pour pouvoir être utilisé simultanément par plusieurs observateurs, caractérisé en ce que trois faisceaux d'observation (1, 2, 3) sont prévus, qui convergent vers l'objet (9), que les centres des pupilles d'entrée (1', 2', 3') des faisceaux d'observation sont situés sur les angles d'un triangle et que des moyens (7) pour la division physique des rayons sont prévus pour au moins un (3) des faisceaux d'observation, qui permet une utilisation simultanée de ce faisceau par deux observateurs.

2. Stéréomicroscope selon la revendication 1, caractérisé en ce que la pupille d'entrée (3') commune aux deux observateurs possède un diamètre plus grand du facteur $\sqrt{2}$ environ que le diamètre des deux autres pupilles d'entrée (1', 2').

3. Stéréomicroscope selon la revendication 2, caractérisé en ce que le faisceau d'observation (3) commun aux deux observateurs contient un système pancratique de grande ouverture.

4. Stéréomicroscope selon la revendication 3, caractérisé par le tableau de données suivant pour un système pancratique de grande ouverture:

| Groupes | Rayons | Epaisseurs | $n_d$ | $v_d$ |
|---------|--------|------------|-------|-------|
|  | $R_1 = 66,00$ |  |  |  |
|  |  | $D_{1,2} = 4,8$ | 1.60738 | 56,65 |
| I | $R_2 = -38,10$ |  |  |  |
|  |  | $D_{2,3} = 2,8$ | 1.76180 | 26,95 |
|  | $R_3 = -94,00$ |  |  |  |
|  |  | $D_{3,4} = 31,4$ |  |  |
|  | $R_4 = -31,00$ |  |  |  |
|  |  | $D_{4,5} = 1,5$ | 1.60729 | 59,46 |
|  | $R_5 = 11,30$ |  |  |  |
| II |  | $D_{5,6} = 2,8$ | 1.78472 | 25,76 |
|  | $R_6 = 23,20$ |  |  |  |
|  |  | $D_{6,7} = 2,0$ |  |  |
|  | $R_7 = -90,00$ |  |  |  |
|  |  | $D_{7,8} = 1,5$ | 1.58913 | 61,27 |
|  | $R_8 = 90,00$ |  |  |  |
|  |  | $D_{8,9} = 26,7$ |  |  |
|  | $R_9 = 130,00$ |  |  |  |
|  |  | $D_{9,10} = 2,8$ | 1.76180 | 26,95 |

| Groupes | Rayons | | Epaisseurs | $n_d$ | $\nu_d$ |
|---|---|---|---|---|---|
| III | $R_{10} =$ | $41,00$ | $D_{10,11} = 5,2$ | $1.60738$ | $56,65$ |
| | $R_{11} = -$ | $48,50$ | $D_{11,12} = 80,0$ | | |
| | $R_{12} =$ | $76,30$ | $D_{12,13} = 3,8$ | $1.67270$ | $32,21$ |
| IV | $R_{13} =$ | $43,00$ | $D_{13,14} = 4,5$ | $1.51680$ | $64,17$ |
| | $R_{14} = -$ | $500,00$ | | | |

5. Stéréomicroscope selon la revendication 2, caractérisé en ce que les centres des pupilles d'entrée sont situés sur les angles d'un triangle rectangle-isocele, la pupille d'entrée commune aux deux observateurs étant située sur l'angle droit du triangle.

6. Stéréomicroscope selon la revendication 2, caractérisé en ce que les centres des pupilles d'entrée sont situés sur les angles d'un triangle isocèle.

7. Stéréomicroscope selon la revendication 1, caractérisé en ce que les centres des pupilles d'entrée sont situés sur les angles d'un triangle équilatéral et qu'une division physique des rayons est prévue pour toutes les pupilles d'entrée.

8. Stéréomicroscope selon la revendication 2 ou une des revendications 3–5, caractérisé en ce qu'un éclairage paraxial (4) est prévu, dont la pupille de sortie est très proche des pupilles d'entrée pour les faisceaux d'observation.

**Fig.1**

**Fig.2**

## Fig.3

R$_1$  R$_2$  R$_3$  D$_{2,3}$  D$_{1,2}$  I

R$_4$  R$_5$  R$_6$  R$_7$  R$_8$  D$_{4,5}$  D$_{5,6}$  D$_{6,7}$  D$_{7,8}$  D$_{8,9}$  II

R$_9$  R$_{10}$  R$_{11}$  D$_{9,10}$  D$_{10,11}$  III

R$_{12}$  R$_{13}$  R$_{14}$  D$_{12,13}$  D$_{11,12}$  D$_{13,14}$  IV

D$_{3,4}$

## Fig.4

(D$_{3,4}$, D$_{8,9}$) (mm)

D$_{3,4}$

D$_{8,9}$

f (mm)

11

Fig. 5

Fig. 6